# EUROPEAN PATENT APPLICATION

(11) **EP 4 586 036 A1**
(43) Date of publication of application: **16.07.2025**
(21) Application number: 23862695.6
(22) Date of filing: 11.04.2023
(51) Int. Cl.: G05D 1/00

(54) **INFORMATION PROCESSING DEVICE, INFORMATION PROCESSING METHOD, AND PROGRAM**

(30) Priority: 07.09.2022 JP 2022142213
(71) Applicant: Sony Group Corporation, Tokyo 108-0075 (JP)
(72) Inventor: TOYOURA, Masataka, Tokyo 108-0075 (JP)
(74) Representative: D Young & Co LLP
(86) International application number: PCT/JP2023/014654
(87) International publication number: WO 2024/053145

(57) **Abstract**

An information processing device (10) includes a self-position identification unit (12). The self-position identification unit (12) generates a divided map for each stable section in which the height or posture of the traveling robot (MB) is stable. The self-position identification unit (12) generates connection information indicating a positional relationship between the divided maps on the basis of sensor information obtained during movement between the divided maps.

## Description

### Field

The present invention relates to an information processing device, an information processing method, and a program.

### Background

As a self-position identification method for a robot, a method using an environmental map is known. In this method, a current position is derived by collating an environmental map (advance map) created in advance with currently observed sensor information. In recent years, the activity range of robots is rapidly expanding, and there is an increasing need to operate robots in various environments.

### Citation List

### Patent Literature

Patent Literature 1: JP 2012-242967 A

### Summary

### Technical Problem

In a robot assumed to travel indoors, a flat surface is often assumed as a travel environment. In the identification method using the two-dimensional advance map, it is assumed that the same place of the same subject can be observed by the sensor before and after the movement. However, in an environment where the height and posture of the robot change, such as a case where there is a slope in the movement route, the observation point of the subject changes before and after the movement. Therefore, collation between the advance map and the sensor information is not successful, and a correct position cannot be derived.

Therefore, the present disclosure proposes an information processing device, an information processing method, and a program capable of accurately identifying a self-position in various environments.

### Solution to Problem

According to the present disclosure, an information processing device is provided that comprises a self-position identification unit that generates a divided map for each stable section in which a height or a posture of a traveling robot is stable, and generates connection information indicating a positional relationship between the divided maps on a basis of sensor information obtained during movement between the divided maps. According to the present disclosure, an information processing method in which an information process of the information processing device is executed by a computer, and a program causing a computer to perform the information process of the information processing device are provided.

### Brief Description of Drawings

FIG. 1 is an explanatory diagram of a conventional self-position identification method.
FIG. 2 is a diagram for explaining a problem of a conventional method.
FIG. 3 is a diagram for explaining the approach of the present disclosure.
FIG. 4 is a diagram illustrating a connection example of divided maps by odometry.
FIG. 5 is a diagram illustrating a connection example of divided maps by markers.
FIG. 6 is an explanatory diagram of a method of determining a division position of a traveling area.
FIG. 7 is a diagram illustrating an example of a functional configuration of a robot.
FIG. 8 is a diagram illustrating an example of generating an integrated map using odometry information.
FIG. 9 is a diagram illustrating an example of generating an integrated map using odometry information.
FIG. 10 is a diagram illustrating an example of generating an integrated map using markers.
FIG. 11 is a diagram for explaining an example of autonomous movement using an integrated map.
FIG. 12 is a diagram for explaining an example of autonomous movement using an integrated map.
FIG. 13 is a diagram illustrating an example of a hardware configuration of an information processing device.

### Description of Embodiments

Hereinafter, embodiments of the present disclosure will be described in detail with reference to the drawings. In the following embodiments, the same parts are denoted by the same reference numerals, and redundant description will be omitted.

Note that the description will be given in the following order.
[1. Summary of Invention]
   [1-1. Conventional Method]
   [1-2. Approach of Present Disclosure]
      [1-2-1. Connecting of Divided Maps by Odometry]
      [1-2-2. Connecting of Divided Map by Markers]
      [1-2-3. Method of Determining Division Position]
[2. Configuration of Robot]
[3. Method of Generating Integrated Map]
   [3-1. Connection Example by Odometry]
   [3-2. Connection Example by Markers]
[4. Moving Method using Integrated Map]
[5. Hardware Configuration Example]
[6. Effects]

### [1. Summary of Invention]

### [1-1. Conventional Method]

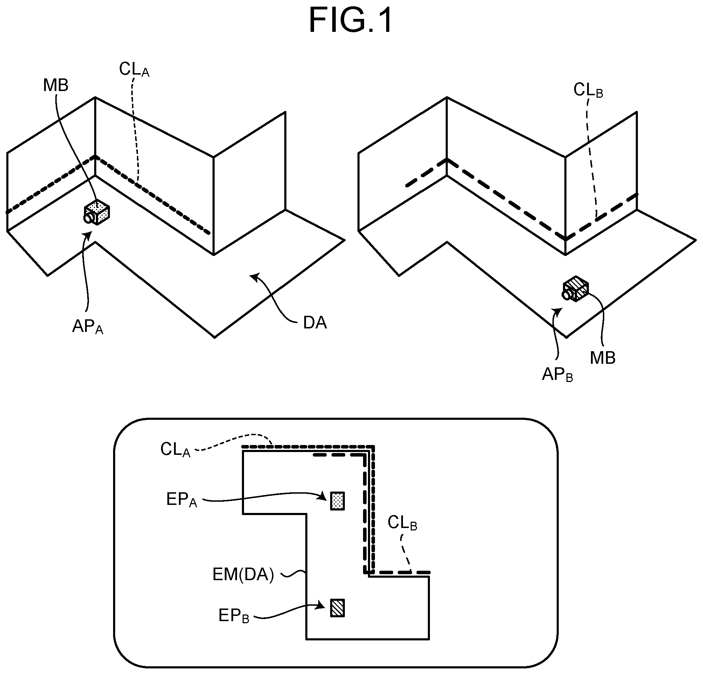

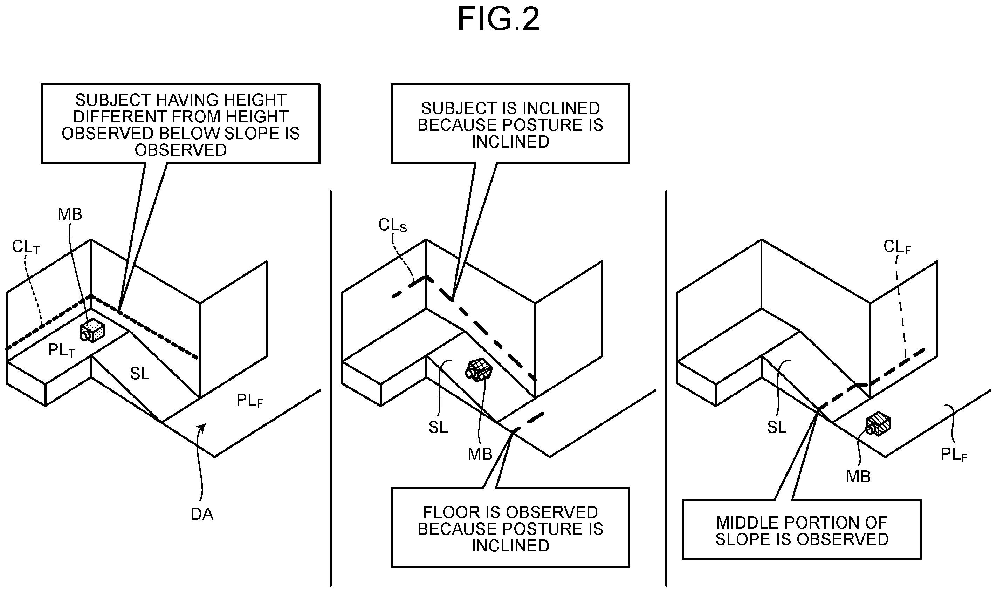

Hereinafter, an outline of the invention will be described. FIG. 1 is an explanatory diagram of a conventional self-position identification method. FIG. 2 is a diagram for explaining a problem of the conventional method.

It is considered to move from a point A AP_{A} to a point B AP_{B} in a traveling area DA. At the point A AP_{A}, a robot MB estimates the position (self-position) EP_{A} of the robot MB by collating a point group CL_{A} observed at the point A AP_{A} with an advance map EM. Even in a case where the robot MB moves to the point B AP_{B} and a point group CL_{B} is observed, the robot MB collates the point group CL_{B} with the advance map EM to estimate a self-position EP_{B}.

In this method, the self-position is estimated by collating the currently observed sensor information with the advance map EM. As a precondition, even in a case where the robot MB moves, it is necessary for the robot MB to be able to observe the same place of the same subject. A plane is assumed as a travel environment, and a two-dimensional map is also used as the advance map EM.

However, when the traveling surface changes three-dimensionally, the above-described premise collapses. For example, when the robot MB travels in an environment including a slope SL, the height and posture of the robot MB change, and the subject to be observed also changes. As a result, completely different observation results are obtained. For example, a point group CL_{F} at a low position is observed in a horizontal section PL_{F} below the slope SL, but a point group CL_{T} at a high position is observed in a horizontal section PL_{T} above the slope SL.

The same also applies to a case where the posture of the robot MB changes due to the slope SL. Even if the same subject as that observed in the horizontal section is observed, another position of the subject is observed, the measurement distance changes, or the floor is observed, so that the above-described premise collapses. For example, since the subject is oblique on the slope SL, a point group CL_{S} in an oblique direction is observed. In some cases, a travelable floor or slope SL is observed as an obstacle depending on the position and posture of the robot MB.

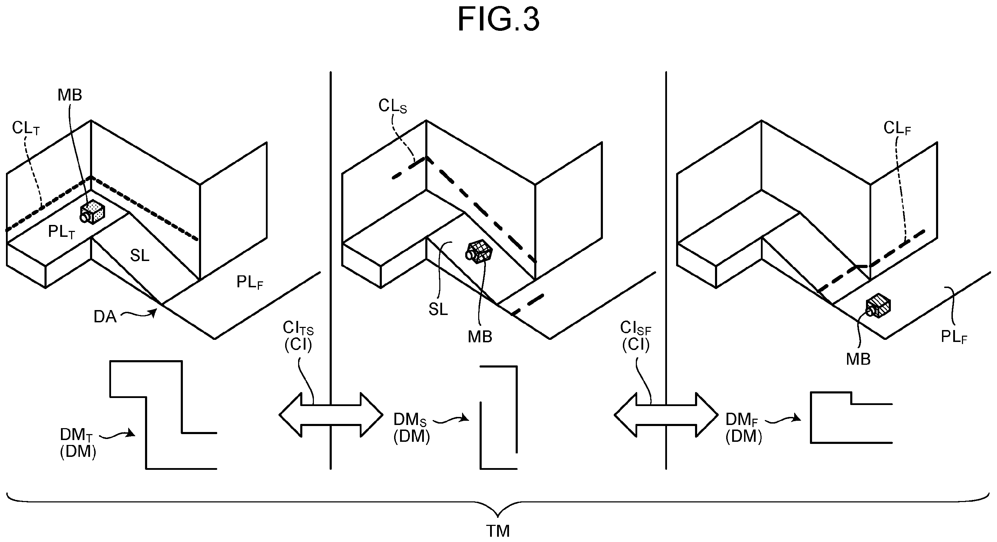

In order to solve the above-described problem, the present disclosure proposes a method of dividing a map in accordance with the height or posture of the robot MB. The map division means that the traveling area DA is divided into a plurality of divided areas, and a two-dimensional divided map (see FIG. 3) is generated for each divided area. In the present disclosure, the positional relationship between the divided maps DM is defined on the basis of the sensor information, and the divided maps DM are connected to each other on the basis of the defined position information.

In this method, it is possible to generate three-dimensional map information of the traveling area DA while performing two-dimensional obstacle detection. The divided map DM is a two-dimensional map similar to the conventional art, and a method of generating the divided map DM is also similar to the conventional art. The sensors used may also be inexpensive sensors such as 2D-LiDAR (2 Dimensions-Laser Imaging Detection and Ranging). Therefore, it is possible to provide inexpensive and highly accurate three-dimensional map information in various travel environments. Hereinafter, a specific description will be given.

### [1-2. Approach of Present Disclosure]

FIG. 3 is a diagram for explaining the approach of the present disclosure.

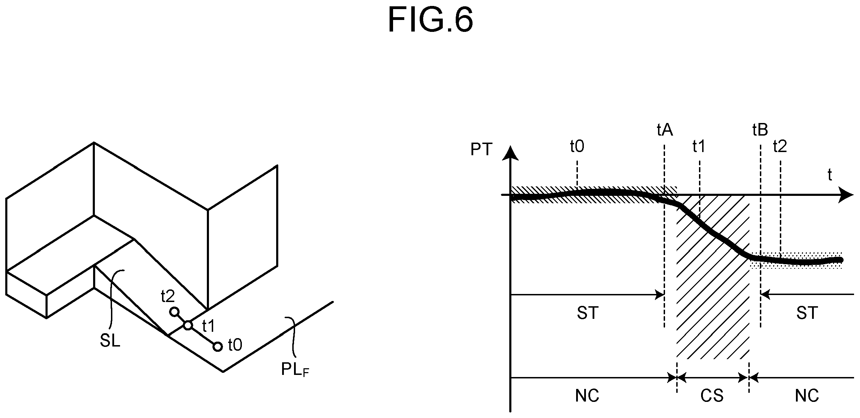

In the present disclosure, a plurality of stable sections ST (see FIG. 6) are set for the three-dimensional traveling area DA, and a two-dimensional divided map DM is generated for each stable section ST. Then, in order to enable seamless movement between the divided maps DM, a positional relationship between the divided maps DM is defined on the basis of sensor information obtained during movement between the divided maps DM.

The stable section ST means a section in which the height or posture of the traveling robot MB is stable. The fact that the height or posture of the traveling robot MB is stable means that the height or posture of the robot MB does not change to such an extent that collation with the two-dimensional map is difficult during traveling. For example, in a case where the robot MB can observe the same place as before the movement after the robot MB has moved, it is determined that the height or posture of the traveling robot MB is stable.

In the example of FIG. 3, the horizontal section PL_{T}, the slope SL, and the horizontal section PL_{F} are set as the stable section ST. In a case where the robot MB moves in the horizontal section PL_{T}, the self-position is identified on the basis of a divided map DM_{T} corresponding to the horizontal section PL_{T}. In a case where the robot MB moves on the slope SL, the self-position is identified on the basis of a divided map DM_{S} corresponding to the slope SL. In a case where the robot MB moves in the horizontal section PL₂, the self-position is identified on the basis of a divided map DM_{F} corresponding to the horizontal section PL_{F}.

In the present disclosure, the positional relationship between the divided maps DM is registered as connection information CI. The connection information CI is generated on the basis of the sensor information acquired while the robot MB is moving between the divided maps DM. The plurality of divided maps DM can be handled as one large map by defining the positional relationship between the divided maps DM. Hereinafter, a map obtained by connecting a plurality of divided maps DM will be referred to as an integrated map TM. The integrated map TM includes three-dimensional map information obtained by integrating all the divided maps DM (two-dimensional map information) and all the pieces of the connection information CI. The integrated map TM can be applied to various environments in which the traveling surface changes three-dimensionally.

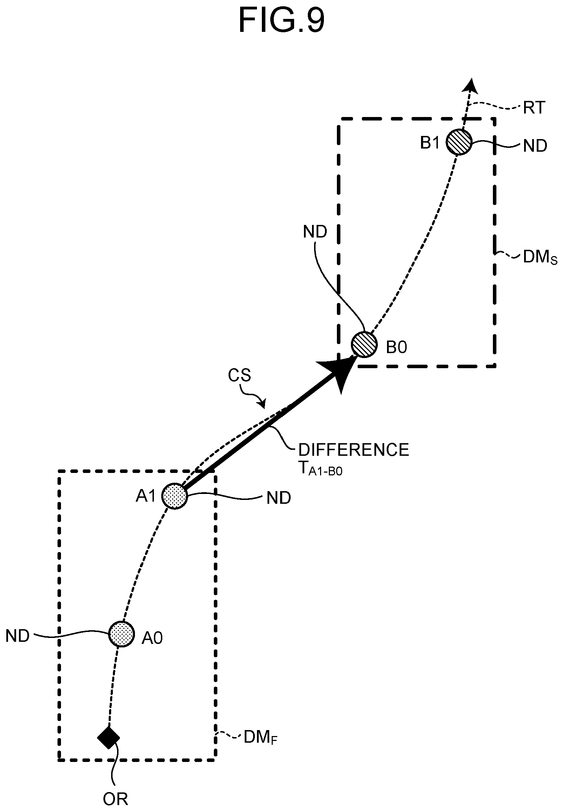

The robot MB can make a movement plan on the basis of the integrated map TM. For example, in a case where the robot MB moves from the horizontal section PL_{T} to the horizontal section PL₂, the robot MB first plans a movement route RT (see FIG. 9) in the horizontal section PL_{T} on the basis of the divided map DM_{T}. When the robot MB reaches the boundary between the horizontal section PL_{T} and the slope SL, the robot MB plans a movement route RT from the horizontal section PL_{T} to the slope SL on the basis of connection information CI_{TS} between the divided map DM_{T} and the divided map DM_{S}.

When the robot MB moves to the slope SL, the robot MB plans a movement route RT in the slope SL using the divided map DM_{S}. When the robot MB reaches the boundary between the slope SL and the horizontal section PL₂, the robot MB plans a movement route RT from the slope SL to the horizontal section PL_{F} on the basis of connection information CI_{SF} between the divided map DM_{S} and the divided map DM_{F}. When the robot MB moves to the horizontal section PL₂, the robot MB plans a movement route RT in the horizontal section PL_{F} using the divided map DM_{F}.

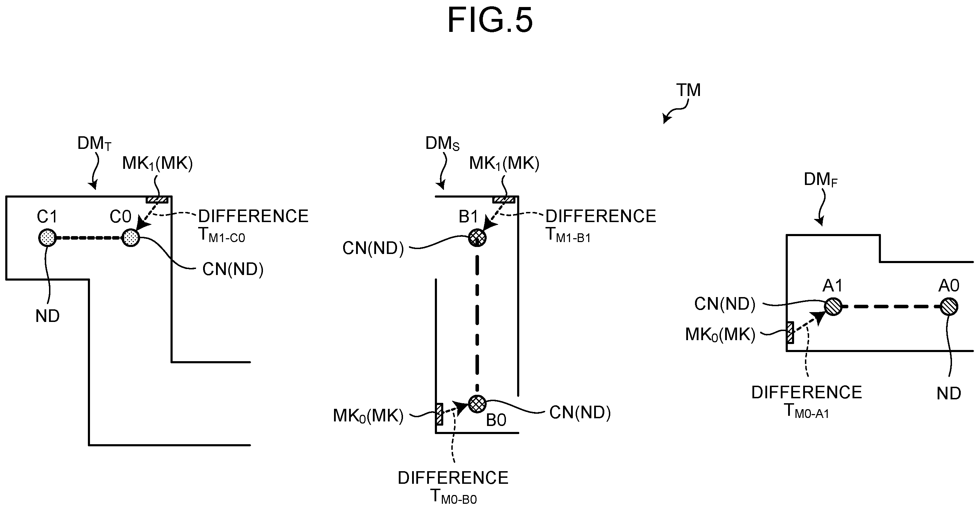

The connection information CI may be generated on the basis of information of odometry when moving between the divided maps DM, or may be generated on the basis of information of one or more markers MK (see FIG. 5) installed in the traveling area DA. The information of odometry can be extracted from a rotation angle of a motor mounted on the robot MB, measurement data of an inertial measurement unit (IMU), and the like. The information of the marker MK can be extracted from image data or the like of the marker MK captured by the robot MB.

### [1-2-1. Connecting of Divided Maps by Odometry]

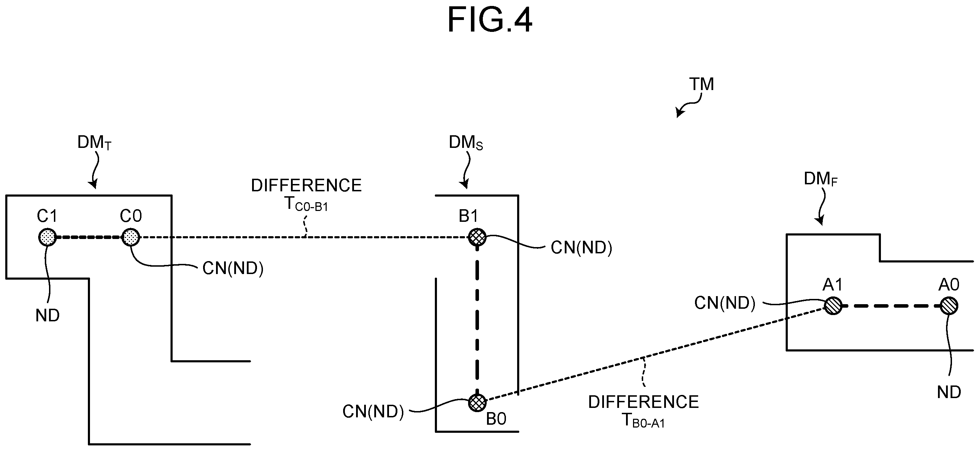

FIG. 4 is a diagram illustrating a connection example of divided maps DM by odometry.

In FIG. 4, "A0", "A1", "BO", "B1", "C0", and "C1" indicate the nodes ND of the divided map DM. Among the plurality of nodes ND included in the divided map DM, a node ND at a boundary with an adjacent divided map DM is referred to as a connection node CN. The connection information CI indicates a positional relationship between adjacent connection nodes CN via a boundary of the divided map DM.

"A1" is the connection node CN of the divided map DM_{F} at the boundary between the divided map DM_{F} and the divided map DM_{S}. "B0" is the connection node CN of the divided map DM_{S} at the boundary between the divided map DM_{S} and the divided map DM_{F}. "B1" is the connection node CN of the divided map DM_{S} at the boundary between the divided map DM_{S} and the divided map DM_{T}. "C0" is the connection node CN of the divided map DM_{T} at the boundary between the divided map DM_{T} and the divided map DM_{S}.

In a case where the robot MB generates the integrated map TM while tracing from the node "A0" to the node "C1", first, the robot MB generates the divided map DM_{F} on the basis of the sensor information obtained during movement in the horizontal section PL_{F}. The robot MB acquires the positional relationship between the connection node "A1" and the connection node "B0" on the basis of the odometry information when the robot MB moves from the connection node "A1" to the connection node "B0". The robot MB records information regarding the positional relationship between the connection node "A1" and the connection node "B0" as the connection information CI_{SF} between the divided map DM_{F} and the divided map DM_{S}.

The robot MB generates the divided map DM_{S} on the basis of the sensor information obtained during movement on the slope SL. The robot MB acquires the positional relationship between the connection node "B1" and the connection node "C0" on the basis of the odometry information when the robot MB moves from the connection node "B1" to the connection node "C0". The robot MB records the information regarding the positional relationship between the connection node "B1" and the connection node "C0" as the connection information CI_{TS} between the divided map DM_{S} and the divided map DM_{T}. The robot MB generates the divided map DM_{T} on the basis of the sensor information obtained during movement in the horizontal section PL_{T}.

By generating the connection information CI on the basis of the odometry information, it is defined how much positional relationship the divided map DM_{F}, the divided map DM_{S}, and the divided map DM_{T} have in the odometry coordinate system. By defining the positional relationship between the divided maps DM, the divided maps DM can be connected to each other. By connecting the divided maps DM, an integrated map TM having three-dimensional map information covering the entire traveling area DA is obtained.

When the robot MB autonomously travels, the robot MB can move seamlessly between the divided maps DM by using the odometry information between the connection nodes CN acquired from the connection information CI.

For example, in a case where the robot MB moves from the node "A0" to the node "C1", the robot MB first moves from the node "A0" to the connection node "A1" while identifying its own position using the divided map DM_{F}. When reaching the connection node "A1", the robot MB calculates a difference T_{B0-A1} between the positions and the postures up to the connection node "B0" on the basis of the connection information CI_{SF}. The robot MB moves from the connection node "A1" to the connection node "B0" only by odometry on the basis of the information of the difference T_{B0-A1}.

When reaching the connection node "B0", the robot MB moves to the connection node "B1" while identifying its own position using the divided map DM_{S}. When reaching the connection node "B1", the robot MB calculates a difference T_{C0-B1} between the positions and the postures up to the connection node "C0" on the basis of the connection information CI_{TS}. The robot MB moves from the connection node "B1" to the connection node "C0" only by odometry on the basis of the information of the difference T_{C0-B1}. When reaching the connection node "C0", the robot MB moves to the node "C1" while identifying its own position using the divided map DM_{T}.

### [1-2-2. Connecting of Divided Map by Markers]

FIG. 5 is a diagram illustrating a connection example of divided maps DM by markers MK.

The divided maps DM can be connected to each other using the information of the markers MK existing in the traveling area DA. The connection information CI is generated as information indicating a positional relationship between the marker MK and the connection node CN. The divided maps DM are connected to each other on the basis of the positional relationship between the marker MK and the connection node CN acquired from the connection information CI. By using the information of the marker MK together with the odometry information, it is also possible to robustly connect the divided maps DM.

As a collation method using the marker MK, there are a two-dimensional barcode, image collation, geometric shape collation, and the like. In addition to the positional relationship between the marker MK and the connection node CN, it is preferable that the ID and the posture of the marker MK can be acquired. In a case where the ID of the marker MK cannot be acquired, it is preferable to adopt a mechanism of assigning the ID of the marker MK in association with the installation coordinates of the marker MK. In a case where the posture of the marker MK cannot be acquired, it is preferable to supplement the information of the posture by a subsequent process such as searching the posture of the marker MK as unknown at the time of identifying its own position.

When the robot MB autonomously travels, the robot MB can move seamlessly between the divided maps DM on the basis of the positional relationship between the marker MK and the connection node CN acquired from the connection information CI.

For example, in a case where the robot MB moves from the node "A0" to the node "C1", the robot MB first moves from the node "A0" to the connection node "A1" while identifying its own position using the divided map DM_{F}. When reaching the connection node "A1", the robot MB specifies a marker MK₀ observed from the connection node "A1" using a camera image or the like. The robot MB acquires the connection information CI_{SF} associated with the marker MK₀ from a database.

In the connection information CI_{SF}, information regarding the connection node "A1" of the divided map DM_{F} serving as a connection source, a positional relationship between the robot MB and the marker MK₀ at the connection node "A1" (a difference T_{M0-A1} in position and posture), the connection node "B0" of the divided map DM_{S} serving as a connection destination, and a positional relationship between the robot MB and the marker MK₀ at the connection node "B0" (a difference T_{M0-B0} in position and posture) is defined. The robot MB moves from the connection node "A1" to the connection node "B0" on the basis of the positional relationship between the robot MB and the marker MK₀ at the connection node "A1" and the positional relationship between the robot MB and the marker MK₀ at the connection node "B0" acquired from the connection information CI_{SF},.

The movement from the connection node "A1" to the connection node "B0" may be performed with reference to the odometry, or may be performed such that the positional relationship between the robot MB and the marker MK₀ becomes the difference T_{M0-B0} while observing the marker MK₀.

When reaching the connection node "B0", the robot MB moves to the connection node "B1" while identifying its own position using the divided map DM_{S}. When reaching the connection node "B1", the robot MB specifies a marker MK₁ observed from the connection node "B1" using a camera image or the like. The robot MB acquires the connection information CI_{TS} associated with the marker MK₁ from a database.

In the connection information CI_{TS}, information regarding the connection node "B1" of the divided map DM_{S} serving as a connection source, a positional relationship between the robot MB and the marker MK₁ at the connection node "B1" (a difference T_{M1-B1} in position and posture), the connection node "C0" of the divided map DM_{T} serving as a connection destination, and a positional relationship between the robot MB and the marker MK₁ at the connection node "C0" (a difference T_{M1-C0} in position and posture) is defined. The robot MB moves from the connection node "B1" to the connection node "C0" on the basis of the positional relationship between the robot MB and the marker MK₁ at the connection node "B1" and the positional relationship between the robot MB and the marker MK₁ at the connection node "C0" acquired from the connection information CI_{TS}.

The movement from the connection node "B1" to the connection node "C0" may be performed with reference to the odometry, or may be performed such that the positional relationship between the robot MB and the marker MK₁ becomes the difference T_{M1-C0} while observing the marker MK₁.

### [1-2-3. Method of Determining Division Position]

FIG. 6 is an explanatory diagram of a method of determining a division position of the traveling area DA.

The division positions of the traveling area DA are determined on the basis of a change in the height of the traveling position or a change in the traveling posture of the robot MB. In the example of FIG. 6, the division position is determined on the basis of the change in the traveling posture. The robot MB detects a section in which the traveling posture has greatly changed beyond the allowable reference as a posture sudden change section CS, and specifies the posture sudden change section CS as the division position of the traveling area DA.

For example, the robot MB moves from the horizontal section PL_{F} to the slope SL during a period from time "t0" to time "t2". The robot MB monitors a pitch angle PT of the traveling robot MB using a sensor such as an IMU. The robot MB determines that the traveling posture is stable in a case where the amount of change in the pitch angle PT per unit time is equal to or less than an allowable change amount.

At time "t0", the robot MB travels in the horizontal section PL_{F}. Therefore, a large change does not occur in the pitch angle PT. At time "t1", the robot MB travels on the boundary between the horizontal section PL_{F} and the slope SL. Therefore, the pitch angle PT gradually increases toward the inclination angle of the slope SL. At time "t2", the robot MB travels on the slope SL. Therefore, the pitch angle PT is stabilized at the inclination angle of the slope SL.

The robot MB performs map division in a case where a large change occurs in the pitch angle PT and the amount of change in the pitch angle PT per unit time is stabilized by a specific amount of change. In the example of FIG. 6, a condition that a large change occurs in the pitch angle PT and a change in the latest pitch angle PT is stabilized at the time point reaching time "t2" is satisfied.

A section (non-sudden change section NC) in which the amount of change in the pitch angle PT per unit time is equal to or less than the allowable change amount after time "t1" is a node candidate section of the divided map DM_{S}. The robot MB adopts the position at time tB closest to the posture sudden change section CS among the node candidate sections of the divided map DM_{S} as the start position of the divided map DM_{S}. A section after time tB is the stable section ST. The robot MB sets a node ND (connection node CN) at the position of time tB.

Similarly, the robot MB adopts the position at time tA closest to the posture sudden change section CS among the node candidate sections of the divided map DM_{F} as the end position of the divided map DM_{F}. The robot MB sets a node ND (connection node CN) at the position of time tA.

The posture sudden change section CS is a section in which the precondition for creating the two-dimensional map described above fails. Therefore, when the sensor information in the posture sudden change section CS is used, the divided map DM fails. Therefore, the robot MB creates the divided map DM_{F} and the divided map DM_{S} after excluding the sensor information in the posture sudden change section CS. The removal method may be a method of selectively acquiring only the sensor information when the change in the traveling posture is small, or a method of deleting the sensor information of the portion where the change in the traveling posture is large afterwards.

In the example of FIG. 6, the division position is determined on the basis of the amount of change in the pitch angle PT per unit time, but the division position may be determined in comprehensive consideration of the roll angle, the pitch angle, the yaw angle, and the height of the traveling position.

### [2. Configuration of Robot]

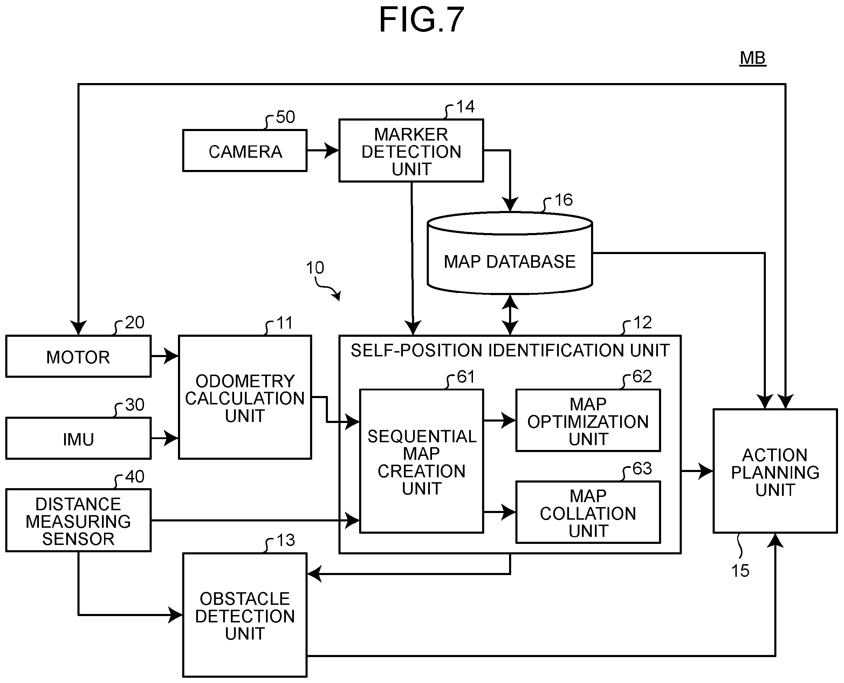

FIG. 7 is a diagram illustrating an example of a functional configuration of the robot MB.

The robot MB includes an information processing device 10, a motor 20, an IMU 30, a distance measuring sensor 40, and a camera 50. The robot MB drives the motor 20 to perform autonomous movement. The robot MB recognizes the outside world on the basis of the image of the camera 50 and the measurement data (depth data) of the distance measuring sensor 40. As the distance measuring sensor 40, a stereo camera, a time of flight (ToF) camera, 3DLiDAR, 2DLiDAR, and the like can be used. The measurement data of the distance measuring sensor 40 and the IMU 30 is output as sensor information together with the image of the camera 50 and the measurement data of the rotation speed of the motor 20.

The information processing device 10 creates an integrated map TM and makes a movement plan of the robot MB on the basis of sensor information output in time series from the motor 20, the IMU 30, the distance measuring sensor 40, and the camera 50. The information processing device 10 includes, for example, an odometry calculation unit 11, a self-position identification unit 12, an obstacle detection unit 13, a marker detection unit 14, an action planning unit 15, and a map database 16.

The odometry calculation unit 11 generates highly accurate odometry information by combining measurement data of the rotation speed of the motor 20 and measurement data of the IMU 30 with a Kalman filter or the like. The marker detection unit 14 extracts information of the marker MK from the captured image of the marker MK. The information of the extracted marker MK includes, for example, a positional relationship (relative position and posture) between the marker MK and the camera 50, an ID of the marker MK, and the like.

The self-position identification unit 12 creates the integrated map TM and identifies the self-position on the basis of the sensor information. The self-position identification unit 12 includes, for example, a sequential map creation unit 61, a map optimization unit 62, and a map collation unit 63.

The sequential map creation unit 61 detects the posture of the robot MB in the pitch direction on the basis of the measurement data of the IMU 30. The sequential map creation unit 61 detects, as the stable section ST, a section in which the change in the posture of the traveling robot MB in the pitch direction satisfies the allowable reference. The sequential map creation unit 61 sequentially generates a peripheral map on the basis of the sensor information (for example, depth data at each time acquired in time series) obtained in the stable section ST. The map optimization unit 62 generates a divided map DM by adjusting (optimizing) and integrating a plurality of sequentially generated peripheral maps so as not to cause inconsistency.

The sequential map creation unit 61 detects, as the posture sudden change section CS, a section in which a change in posture exceeding the allowable reference has occurred. The map optimization unit 62 generates the divided map DM of the stable section ST immediately before the posture sudden change section CS on the basis of the sensor information up to the node ND immediately before the posture sudden change section CS. The map optimization unit 62 generates the divided map DM of the stable section ST immediately after the posture sudden change section CS on the basis of the sensor information from the node ND immediately after the posture sudden change section CS.

The generated divided map DM is stored in the map database 16. The map collation unit 63 collates the peripheral map sequentially created by the sequential map creation unit 61 with the divided map DM stored in the map database 16, and identifies its own position.

The map optimization unit 62 generates a divided map DM for each stable section ST in which the height or posture of the traveling robot MB is stable. The map optimization unit 62 generates the connection information CI indicating a positional relationship between the divided maps DM on the basis of sensor information (odometry information or information of the marker MK) obtained during movement between the divided maps DM. The map optimization unit 62 outputs the created divided map DM and the connection information CI to the map database 16.

The map database 16 stores a plurality of divided maps DM constituting the integrated map TM and one or more pieces of connection information CI. For example, the connection information CI includes a connection node CN set for each divided map DM and difference information of the positions and postures of the robot MB between the connection nodes CN. The difference information is information regarding a difference between the position and posture of the robot MB at the connection node CN serving as the connection source and the position and posture of the robot MB at the connection node CN serving as the connection destination. The difference information is generated on the basis of odometry information between the connection nodes CN.

The connection information CI can also include a connection node CN set for each divided map DM and marker position information indicating a positional relationship between the connection node CN and the marker MK. The marker position information can include information regarding the ID, the position, and the posture viewed from the connection node CN of the marker MK.

The obstacle detection unit 13 detects a positional relationship between a surrounding obstacle and the robot MB on the basis of the depth data acquired from the distance measuring sensor 40 and the information of its own position acquired from the self-position identification unit 12.

The action planning unit 15 makes a movement plan toward a designated destination while avoiding the detected obstacle. For example, the action planning unit 15 selects a plurality of divided maps DM existing on the movement route RT to the destination. The action planning unit 15 plans a movement route RT in the divided map DM for each selected divided map DM. In addition, the action planning unit 15 plans a movement route RT between the divided maps DM on the basis of the connection information CI. The action planning unit 15 sends a control command to the motor 20 so as to trace the generated movement route RT while referring to its own position.

### [3. Method of Generating Integrated Map]

### [3-1. Connection example by odometry]

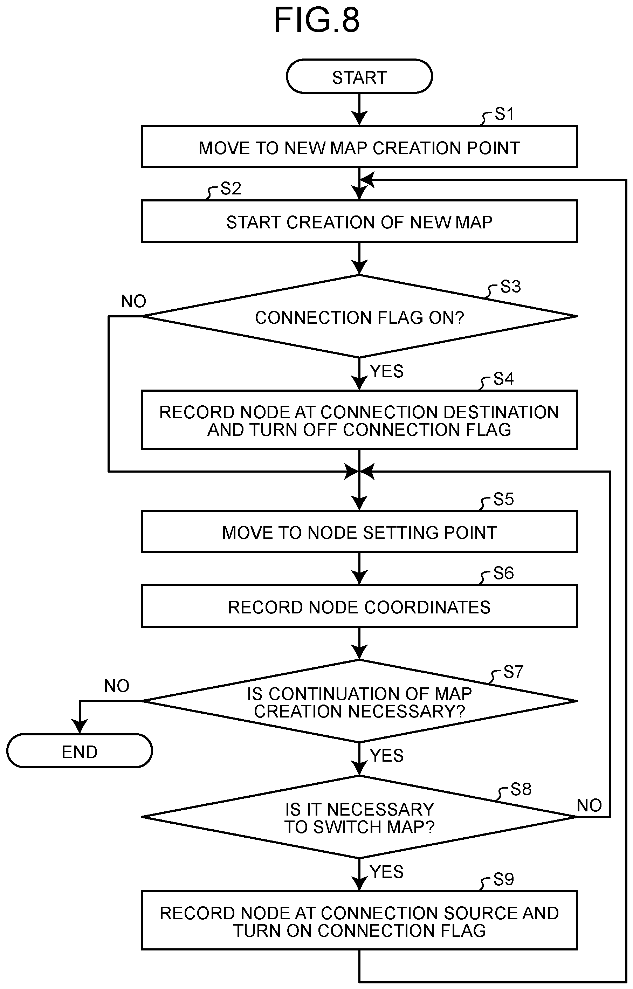

Hereinafter, an example of a method of generating the integrated map TM will be described. FIGS. 8 and 9 are diagrams illustrating examples of generating the integrated map TM using the odometry information.

In FIG. 9, after creating the divided map DM_{F}, the robot MB moves to the node "B0" to create a new divided map DM_{S}. The robot MB moves to a creation point of the new divided map DM_{S} (Step S1), and starts creation of the divided map DM_{S} (Step S2). The created point means the position (node "B0") of the node ND to be recorded as the start position of the divided map DM_{S}.

The robot MB sets a position to be recorded as the node ND as a node setting point. The robot MB sets a map coordinate system, and records coordinates of the node setting point on the map coordinate system as node coordinates while sequentially moving all the node setting points. As a result, the divided map DM is created. The node coordinates are automatically recorded, but may be manually recorded.

After recording the node ND at the start position, the robot MB determines whether a connection flag is ON (Step S3). The connection flag means a flag indicating that another divided map DM to be connected is created in the previous stage. In a case where it is necessary to create another divided map DM after the creation of a certain divided map DM is completed, the connection flag is set to ON before starting the creation of another divided map DM. In a case where there is no divided map DM created in the previous stage, the connection flag is set to OFF.

In the example of FIG. 9, another divided map DM_{F} to be connected is created before the currently created divided map DM_{S}. Therefore, when the creation of the divided map DM_{S} is started, the connection flag is set to ON.

In a case where the connection flag is ON (Step S3: Yes), the robot MB records the node ND at the start position of the divided map DM_{S} as a connection destination node (connection node "B0"). The robot MB records difference information (difference T_{A1-B0}) regarding the position and posture of the robot MB between the connection source node (connection node "A1") of another divided map DM_{F} created in the previous stage and the connection destination node (connection node "B0") that is the current position. The difference information is generated on the basis of odometry information between the connection node "A1" and the connection node "B0". The origin OR of the odometry is, for example, a start position of the divided map DM_{F} serving as a connection source. After recording the connection node "B0" and the difference information, the robot MB turns off the connection flag (Step S4).

After recording the node ND at the start position, the robot MB sequentially moves to another node setting point (Step S5), and records node coordinates (Step S6). In the example of FIG. 9, in a case where another divided map DM_{F} to be connected exists in the preceding stage of the divided map DM_{S}, but the divided map DM_{F} does not exist, the connection flag is turned off before the divided map DM_{S} is created. In a case where the connection flag is OFF (Step S3: No), the process in Step S4 is not performed, and the processes in Steps S5 and S6 are directly performed.

When the node coordinates of the current node setting point are recorded, the robot MB determines whether continuation of creation of the divided map DM_{S} is necessary (Step S7). In a case where there is a node setting point where the node coordinates are not recorded or in a case where it is necessary to newly create another divided map DM, the robot MB determines that it is necessary to continue the creation of the divided map DM_{S}. The user may determine whether it is necessary to continue the creation of the divided map DM_{S}.

In a case where it is not necessary to continue the creation of the divided map DM_{S} (Step S7: No), the robot MB ends the creation of the divided map DMS and outputs the map information of the divided map DMS to the map database 16. In addition, the robot MB outputs the difference information to the map database 16 as the connection information CI with the previous divided map DMF. Then, the robot MB ends the creation processing of the integrated map TM.

In a case where it is necessary to continue the creation of the divided map DM_{S} (Step S7: Yes), the robot MB determines whether it is necessary to switch the divided map DM (Step S8). The robot MB determines that it is necessary to switch the divided map DM_{S} being created in a case where the robot MB detects an entry into a region (posture sudden change section CS) where the height or the posture during traveling changes and detects a section (non-sudden change section NC) where the robot MB is stabilized in a specific posture after the entry.

In a case where it is necessary to switch the divided map DM (Step S8: Yes), the robot MB records the node ND in the non-sudden change section NC closest to the posture sudden change section CS as the connection source node (the connection node "B1") (Step S9). Then, the process returns to Step S2, and the robot MB creates a new divided map DM at the subsequent stage of the divided map DM_{S}. In a case where it is not necessary to switch the divided map DM (Step S8: No), the process returns to Step S5, and the robot MB repeats the above-described process until the node coordinates of all the node setting points are recorded.

### [3-2. Connection example by markers]

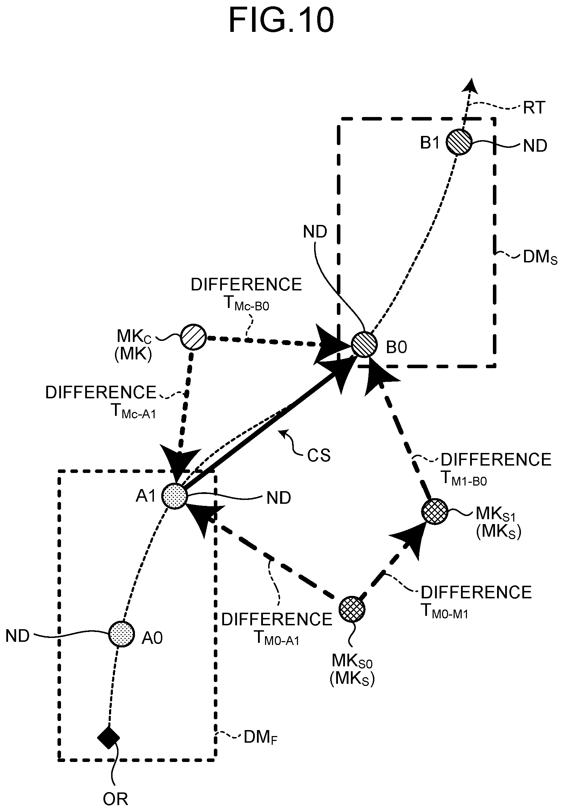

FIG. 10 is a diagram illustrating an example of generating the integrated map TM using the marker MK. Hereinafter, differences from the example of generating the integrated map TM illustrated in FIGS. 8 and 9 will be described.

In the example of FIG. 10, the connection information CI is generated on the basis of the positional relationship between the robot MB and the marker MK at the connection node CN. The connection information CI includes a connection node CN set for each divided map DM and marker position information indicating a positional relationship between the connection node CN and the marker MK. There are two types of markers MK: a common marker MK_{C} and a separation marker MK_{S}. The common marker MK_{C} and the separation marker MK_{S} may be used alternatively or in combination.

The common marker MK_{C} is a marker MK that can be observed from both the traveling area DA of the divided map DM serving as a connection source and the traveling area DA of the divided map DM serving as a connection destination. In the example of FIG. 10, the common marker MK_{C} can be observed from both the connection node "A1" of the divided map DM_{F} serving as the connection source and the connection node "B0" of the divided map DM_{S} serving as the connection destination.

In a case where the common marker MK_{C} is used, the robot MB generates first difference information and second difference information as the marker position information. The first difference information is information regarding a difference T_{MC-A1} in position and posture between the robot MB and the common marker MK_{C} at the connection node CN serving as a connection source. The second difference information is information regarding a difference T_{MC-B0} in position and posture between the robot MB and the common marker MK_{C} at the connection node CN serving as a connection destination.

The separation marker MK_{S} is a marker MK that can be observed only from the traveling area DA of one of the divided maps DM. In the traveling area DA, as the separation marker MK_{S}, there are a first separation marker MK_{S0} corresponding to one divided map DM to be connected and a second separation marker MK_{S1} corresponding to the other divided map DM.

In the example of FIG. 10, the first separation marker MK_{S0} can be observed only from the connection node "A1" of the divided map DM_{F} serving as the connection source, and cannot be observed from the connection node "B0" of the divided map DM_{S} serving as the connection destination. The second separation marker MK_{S1} can be observed only from the connection node "B0" of the divided map DM_{S} serving as a connection destination, and cannot be observed from the connection node "A1" of the divided map DM_{F} serving as a connection source.

In a case where the separation marker MK_{S} is used, the robot MB generates third difference information, fourth difference information, and fifth difference information as the marker position information. The third difference information is information regarding a difference T_{M0-A1} in position and posture between the robot MB and the first separation marker MK_{S0} at the connection node "A1" serving as a connection source. The fourth difference information is information regarding a difference T_{M1-B0} in position and posture between the robot MB and the second separation marker MK_{S1} at the connection node "B0" serving as a connection destination. The fifth difference information is information regarding a difference T_{M0-M1} in position and posture between the first separation marker MK_{S0} and the second separation marker MK_{S1}.

### [4. Moving Method using Integrated Map]

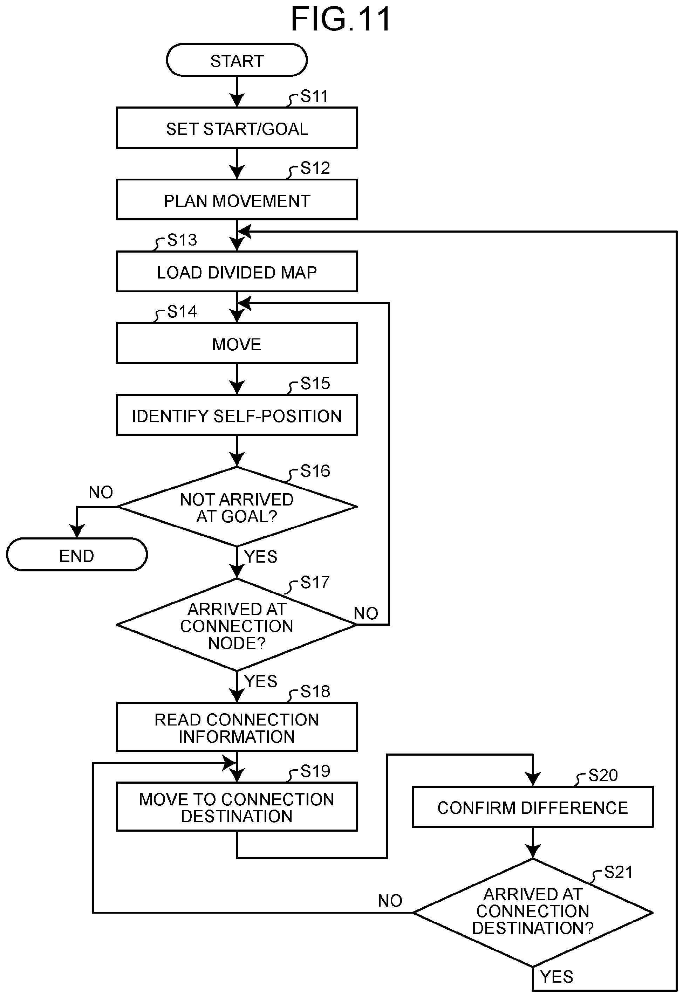

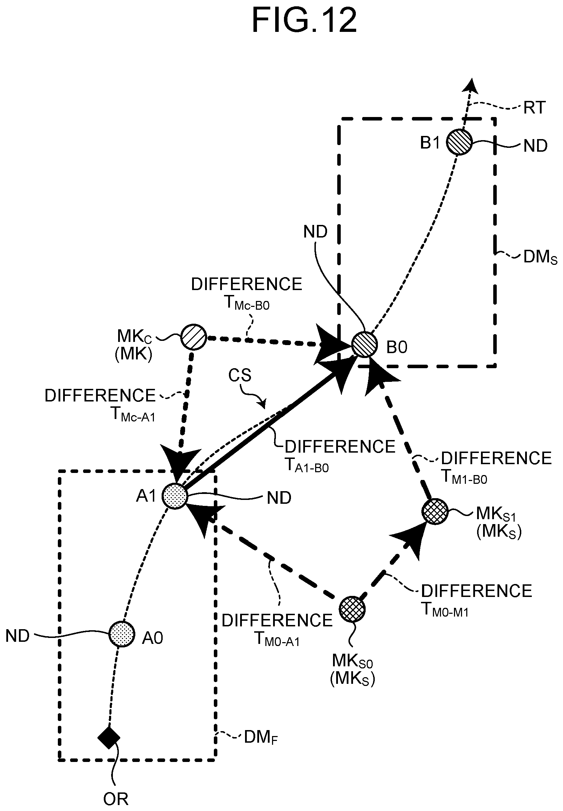

FIGS. 11 and 12 are diagrams for explaining an example of autonomous movement using the integrated map TM.

The robot MB sets a start point and a goal point on the basis of the user input information (Step S11). In the example of FIG. 12, for example, the start point is set to a node "A0", and the goal point is set to a node "B1". When the user sets the approximate position, the robot MB can set the node ND close to the designated position of the user as the start point and the goal point.

In a case where the robot MB performs self-position search on the basis of GPS (Global Positioning System, Global Positioning Satellite) information or the like, the user does not need to set a start point. Even in a case where the GPS is not available, it is also possible to estimate the start position without setting by the user by performing matching processing of self-position identification on all of the peripheral sensor data that can be acquired by the robot MB disposed at the start point and the divided map DM stored in the map database 16.

The robot MB plans a movement route RT from the start point to the goal point using the integrated map TM registered in the map database 16 (Step S12). The robot MB loads the divided map DM_{F} around the start point (Step S13). The robot MB moves along the planned movement route RT while avoiding obstacles (Step S14). The robot MB collates the external situation recognized on the basis of the sensor information with the divided map DM_{F} to identify the self-position (Step S15).

The robot MB determines whether the robot MB has arrived at the goal point (Step S16). In a case where the robot MB has arrived at the goal point (Step S16: No), the robot MB ends the autonomous movement. In a case where the robot MB has not arrived at the goal point (Step S16: Yes), the robot MB determines whether the robot MB has arrived at the connection node CN (Step S17).

In a case where the robot MB has not arrived at the connection node CN (Step S17: No), the process returns to Step S14, and the robot MB continues to move on the movement route RT until the robot MB arrives at the connection node CN.

In a case where the robot MB has arrived at the connection node CN (Step S17: Yes), the robot MB reads the connection information CI between the currently used divided map DM_{F} and the subsequent divided map DM_{S} (Step S18). In the example of FIG. 12, the difference information based on odometry (difference T_{A1-B0}), the difference information based on the common marker MK_{C} (difference T_{MC-A1}, difference T_{MC-B0}), and the difference information based on the separation marker MK_{S} (T_{M0-A1,} T_{M1-B0}, T_{M0-M1}) are illustrated as the connection information CI. These pieces of difference information may be used alternatively or in combination.

The robot MB starts moving toward the node "B0" of the connection destination on the basis of the connection information CI (Step S19). The robot MB moves while confirming the difference in position and posture based on the odometry or the difference in position and posture based on the marker MK (Step S20). The robot MB collates the difference in position and posture detected on the basis of the sensor information with the difference information of the connection information CI to determine whether the robot MB has arrived at the node "B0" of the connection destination (Step S21).

In a case where the robot MB has not arrived at the node "B0" of the connection destination (Step S21: No), the process returns to Step S19, and the robot MB continues to move on the basis of the connection information CI until the robot MB arrives at the node "B0" of the connection destination. In a case where the robot MB has arrived at the node "B0" of the connection destination (Step S21: Yes), the processing returns to Step S13, and the robot MB loads the divided map DM_{S} of the connection destination. Then, the robot MB continues to move along the movement route RT while performing self-position identification to the goal point (node "B1").

### [5. Hardware Configuration Example]

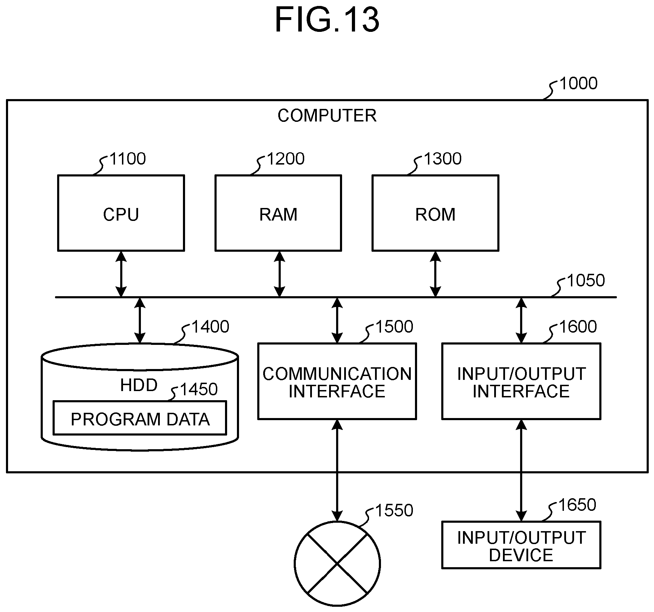

FIG. 13 is a diagram illustrating an example of a hardware configuration of the information processing device 10.

The information processing of the information processing device 10 is realized by, for example, a computer 1000. The computer 1000 includes a central processing unit (CPU) 1100, a random access memory (RAM) 1200, a read only memory (ROM) 1300, a hard disk drive (HDD) 1400, a communication interface 1500, and an input/output interface 1600. Each unit of the computer 1000 is connected by a bus 1050.

The CPU 1100 operates on the basis of a program (program data 1450) stored in the ROM 1300 or the HDD 1400, and controls each unit. For example, the CPU 1100 develops a program stored in the ROM 1300 or the HDD 1400 in the RAM 1200, and executes processing corresponding to various programs.

The ROM 1300 stores a boot program such as a basic input output system (BIOS) executed by the CPU 1100 when the computer 1000 is activated, a program depending on hardware of the computer 1000, and the like.

The HDD 1400 is a non-transitory computer-readable recording medium that non-transiently records a program executed by the CPU 1100, data used by the program, and the like. Specifically, the HDD 1400 is a recording medium that records the information processing program according to the embodiment as an example of the program data 1450.

The communication interface 1500 is an interface for the computer 1000 to connect to an external network 1550 (for example, the Internet). For example, the CPU 1100 receives data from another device or transmits data generated by the CPU 1100 to another device via the communication interface 1500.

The input/output interface 1600 is an interface for connecting an input/output device 1650 and the computer 1000. For example, the CPU 1100 receives data from an input device such as a keyboard and a mouse via the input/output interface 1600. In addition, the CPU 1100 transmits data to an output device such as a display device, a speaker, or a printer via the input/output interface 1600. Furthermore, the input/output interface 1600 may function as a media interface that reads a program or the like recorded in a predetermined recording medium (media). The medium is, for example, an optical recording medium such as a digital versatile disc (DVD) or a phase change rewritable disk (PD), a magneto-optical recording medium such as a magneto-optical disk (MO), a tape medium, a magnetic recording medium, a semiconductor memory, or the like.

For example, in a case where the computer 1000 functions as the information processing device 10 according to the embodiment, the CPU 1100 of the computer 1000 implements the functions of the above-described units by executing the information processing program loaded on the RAM 1200. In addition, the HDD 1400 stores an information processing program, various models, and various data according to the present disclosure. Note that the CPU 1100 reads the program data 1450 from the HDD 1400 and executes the program data, but as another example, these programs may be acquired from another device via the external network 1550.

### [6. Effects]

The information processing device 10 includes a self-position identification unit 12. The self-position identification unit 12 generates the divided map DM for each stable section ST in which the height or posture of the traveling robot MB is stable. The self-position identification unit 12 generates connection information CI indicating a positional relationship between the divided maps DM on the basis of sensor information obtained during movement between the divided maps DM. In the information processing method of the present disclosure, the processing of the information processing device 10 is executed by the computer 1000. The program of the present disclosure causes the computer 1000 to implement processing of the information processing device 10.

According to this configuration, map division is performed according to a change in the height of the traveling position or the traveling posture. In the stable section ST indicated by the divided map DM, no discontinuous change occurs in the sensing region. Even if the robot MB moves, the same place of the same subject observed before movement can be observed by the sensor. Therefore, the position in the divided map DM is accurately identified by collating the divided map DM with the sensor information. The position outside the divided map DM (outside the stable section ST) is identified as a relative position from the divided map DM on the basis of the sensor information. Even in a case where the traveling surface changes three-dimensionally, three-dimensional map information can be obtained by generating the divided map DM for each stable section ST and connecting the divided maps DM to each other on the basis of the connection information CI. Therefore, the self-position can be accurately identified even in various environments other than a plane.

The connection information CI includes a connection node CN set for each divided map DM and difference information of the positions and postures of the robot MB between the connection nodes CN. The difference information is information regarding a difference between the position and posture of the robot MB at the connection node CN serving as the connection source and the position and posture of the robot MB at the connection node CN serving as the connection destination.

According to this configuration, the divided maps DM can be accurately connected to each other.

The difference information is generated on the basis of odometry information between the connection nodes CN.

According to this configuration, the difference information is generated with high accuracy.

The connection information CI includes a connection node CN set for each divided map DM and marker position information indicating a positional relationship between the connection node CN and the marker.

According to this configuration, the divided maps DM can be accurately connected to each other.

For example, the marker MK is a common marker MK_{C} that can be observed from both the connection node CN serving as a connection source and the connection node CN serving as a connection destination. The marker position information includes first difference information and second difference information. The first difference information is information regarding a difference in position and posture between the robot MB and the common marker MK_{C} at the connection node CN serving as a connection source. The second difference information is information regarding a difference in position and posture between the robot MB and the common marker MK_{C} at the connection node CN serving as a connection destination.

According to this configuration, the divided maps DM can be accurately connected to each other.

For example, as the marker MK, there are a first separation marker MK_{S0} that can be observed only from the connection node CN serving as a connection source, and a second separation marker MK_{S1} that can be observed only from the connection node CN serving as a connection destination. The marker position information includes third difference information, fourth difference information, and fifth difference information. The third difference information is information regarding a difference in position and posture between the robot MB and the first separation marker MK_{S0} at the connection node CN serving as a connection source. The fourth difference information is information regarding a difference in position and posture between the robot MB and the second separation marker MK_{S1} at the connection node CN serving as a connection destination. The fifth difference information is information regarding a difference in position and posture between the first separation marker MK_{S0} and the second separation marker MK_{S1}.

According to this configuration, the divided maps DM can be accurately connected to each other.

The self-position identification unit 12 detects, as the stable section ST, a section in which the change in the posture of the traveling robot MB in the pitch direction satisfies the allowable reference.

According to this configuration, discontinuous changes are less likely to occur in the sensing region within the stable section ST.

The self-position identification unit 12 detects, as the posture sudden change section CS, a section in which a change in posture exceeding the allowable reference has occurred. The self-position identification unit 12 generates the divided map DM of the stable section ST immediately before the posture sudden change section CS on the basis of the sensor information up to the node ND immediately before the posture sudden change section CS. The self-position identification unit 12 generates the divided map DM of the stable section ST immediately after the posture sudden change section CS on the basis of the sensor information from the node ND immediately after the posture sudden change section CS.

According to this configuration, the divided map DM is generated by selectively using the sensor information of the stable section ST. Since the sensor information in the posture sudden change section CS is not used, the divided map DM with high accuracy is generated.

The self-position identification unit 12 sequentially generates a peripheral map on the basis of the sensor information obtained in the stable section ST. The self-position identification unit 12 generates the divided map DM by adjusting and integrating the sequentially generated peripheral maps so as not to cause inconsistency.

According to this configuration, the divided map DM with high accuracy is generated.

The information processing device 10 includes an action planning unit 15. The action planning unit 15 selects a plurality of divided maps DM existing on the movement route RT to the destination. The action planning unit 15 plans a movement route RT in the divided map DM for each selected divided map DM.

According to this configuration, an appropriate movement route RT toward the destination is planned.

The action planning unit 15 plans a movement route RT between the divided maps DM on the basis of the connection information CI.

According to this configuration, an appropriate movement route RT between the divided maps DM is planned.

Note that the effects described in the present specification are merely examples and are not limited, and other effects may be provided.

### [Supplementary Note]

Note that the present technology can also adopt the following configurations.
(1) An information processing device comprising:
   a self-position identification unit that generates a divided map for each stable section in which a height or a posture of a traveling robot is stable, and generates connection information indicating a positional relationship between the divided maps on a basis of sensor information obtained during movement between the divided maps.
(2) The information processing device according to (1), wherein
   the connection information includes a connection node set for each of the divided maps, and difference information regarding a difference between a position and a posture of the robot at the connection node serving as a connection source and a position and a posture of the robot at the connection node serving as a connection destination.
(3) The information processing device according to (2), wherein
   the difference information is generated on a basis of odometry information between connection nodes.
(4) The information processing device according to (1), wherein
   the connection information includes a connection node set for each of the divided maps and marker position information indicating a positional relationship between the connection node and a marker.
(5) The information processing device according to (4), wherein
   the marker is a common marker observable from both of the connection node serving as a connection source and the connection node serving as a connection destination, and
   the marker position information includes first difference information regarding a difference in position and posture between the robot and the common marker at the connection node serving as a connection source, and second difference information regarding a difference in position and posture between the robot and the common marker at the connection node serving as a connection destination.
(6) The information processing device according to (4), wherein
   a first separation marker that can be observed only from the connection node serving as a connection source and a second separation marker that can be observed only from the connection node serving as a connection destination are present as the markers, and
   the marker position information includes third difference information regarding a difference in position and posture between the robot and the first separation marker at the connection node serving as a connection source, fourth difference information regarding a difference in position and posture between the robot and the second separation marker at the connection node serving as a connection destination, and fifth difference information regarding a difference in position and posture between the first separation marker and the second separation marker.
(7) The information processing device according to any one of (1) to (6), wherein
   the self-position identification unit detects, as the stable section, a section in which a change in posture of the traveling robot in a pitch direction satisfies an allowable reference.
(8) The information processing device according to (7), wherein
   the self-position identification unit detects, as a posture sudden change section, a section in which a change in posture exceeds the allowable reference, generates a divided map of the stable section immediately before the posture sudden change section on a basis of the sensor information up to a node immediately before the posture sudden change section, and generates a divided map of the stable section immediately after the posture sudden change section on a basis of sensor information from a node immediately after the posture sudden change section.
(9) The information processing device according to any one of (1) to (8), wherein
   the self-position identification unit generates the divided map by sequentially generating a peripheral map on a basis of the sensor information obtained in the stable section and adjusting and integrating a plurality of sequentially generated peripheral maps so as not to cause inconsistency.
(10) The information processing device according to (9), comprising:
   an action planning unit that selects a plurality of divided maps existing on a movement route to a destination and plans the movement route in the divided map for each of the selected divided maps.
(11) The information processing device according to (10), wherein
   the action planning unit plans the movement route between the divided maps on a basis of the connection information.
(12) An information processing method executed by a computer, comprising:
   generating a divided map for each stable section in which a height or a posture of a traveling robot is stable; and
   generating connection information indicating a positional relationship between the divided maps on a basis of sensor information obtained during movement between the divided maps.
(13) A program for causing a computer to implement:
   generating a divided map for each stable section in which a height or a posture of a traveling robot is stable; and
   generating connection information indicating a positional relationship between the divided maps on a basis of sensor information obtained during movement between the divided maps.

### Reference Signs List

- 10: INFORMATION PROCESSING DEVICE

- 12: SELF-POSITION IDENTIFICATION UNIT
- 15: ACTION PLANNING UNIT
- CI: CONNECTION INFORMATION
- CN: CONNECTION NODE
- CS: POSTURE SUDDEN CHANGE SECTION
- DM: DIVIDED MAP
- MB: ROBOT
- MK: MARKER
- MK_{C}: COMMON MARKER
- MK_{S0}: FIRST SEPARATION MARKER
- MK_{S1}: SECOND SEPARATION MARKER
- ND: NODE
- RT: MOVEMENT ROUTE
- ST: STABLE SECTION

## Claims

1. An information processing device comprising:
a self-position identification unit that generates a divided map for each stable section in which a height or a posture of a traveling robot is stable, and generates connection information indicating a positional relationship between the divided maps on a basis of sensor information obtained during movement between the divided maps.

2. The information processing device according to claim 1, wherein
the connection information includes a connection node set for each of the divided maps, and difference information regarding a difference between a position and a posture of the robot at the connection node serving as a connection source and a position and a posture of the robot at the connection node serving as a connection destination.

3. The information processing device according to claim 2, wherein
the difference information is generated on a basis of odometry information between connection nodes.

4. The information processing device according to claim 1, wherein
the connection information includes a connection node set for each of the divided maps and marker position information indicating a positional relationship between the connection node and a marker.

5. The information processing device according to claim 4, wherein
the marker is a common marker observable from both of the connection node serving as a connection source and the connection node serving as a connection destination, and
the marker position information includes first difference information regarding a difference in position and posture between the robot and the common marker at the connection node serving as a connection source, and second difference information regarding a difference in position and posture between the robot and the common marker at the connection node serving as a connection destination.

6. The information processing device according to claim 4, wherein
a first separation marker that can be observed only from the connection node serving as a connection source and a second separation marker that can be observed only from the connection node serving as a connection destination are present as the markers, and
the marker position information includes third difference information regarding a difference in position and posture between the robot and the first separation marker at the connection node serving as a connection source, fourth difference information regarding a difference in position and posture between the robot and the second separation marker at the connection node serving as a connection destination, and fifth difference information regarding a difference in position and posture between the first separation marker and the second separation marker.

7. The information processing device according to claim 1, wherein
the self-position identification unit detects, as the stable section, a section in which a change in posture of the traveling robot in a pitch direction satisfies an allowable reference.

8. The information processing device according to claim 7, wherein
the self-position identification unit detects, as a posture sudden change section, a section in which a change in posture exceeds the allowable reference, generates a divided map of the stable section immediately before the posture sudden change section on a basis of the sensor information up to a node immediately before the posture sudden change section, and generates a divided map of the stable section immediately after the posture sudden change section on a basis of sensor information from a node immediately after the posture sudden change section.

9. The information processing device according to claim 1, wherein
the self-position identification unit generates the divided map by sequentially generating a peripheral map on a basis of the sensor information obtained in the stable section and adjusting and integrating a plurality of sequentially generated peripheral maps so as not to cause inconsistency.

10. The information processing device according to claim 9, comprising:
an action planning unit that selects a plurality of divided maps existing on a movement route to a destination and plans the movement route in the divided map for each of the selected divided maps.

11. The information processing device according to claim 10, wherein
the action planning unit plans the movement route between the divided maps on a basis of the connection information.

12. An information processing method executed by a computer, comprising:
generating a divided map for each stable section in which a height or a posture of a traveling robot is stable; and
generating connection information indicating a positional relationship between the divided maps on a basis of sensor information obtained during movement between the divided maps.

13. A program for causing a computer to implement:
generating a divided map for each stable section in which a height or a posture of a traveling robot is stable; and
generating connection information indicating a positional relationship between the divided maps on a basis of sensor information obtained during movement between the divided maps.
